# EUROPÄISCHE PATENTSCHRIFT

(11) **EP 3 258 243 B1**
(45) Veröffentlichungstag und Bekanntmachung des Hinweises auf die Patenterteilung: **08.05.2019**
(21) Anmeldenummer: 16174237.4
(22) Anmeldetag: 13.06.2016
(51) Int. Cl.: G01N 21/47, G01N 15/02, G01N 21/57, G01N 21/55

(54) **SENSORANORDNUNG UND VERFAHREN ZUR BESTIMMUNG EINER BETAUUNG**
SENSOR ASSEMBLY AND METHOD FOR DETECTING DEW FORMATION
SYSTEME DE CAPTEUR ET PROCEDE DESTINE A LA DETERMINATION D'UNE CONDENSATION

(43) Veröffentlichungstag der Anmeldung: 20.12.2017
(73) Patentinhaber: Weiss Umwelttechnik GmbH, 35447 Reiskirchen (DE)
(72) Erfinder: SCHLOSSER, Volker, 35305 Grünberg (DE)
(74) Vertreter: advotec.

(56) Entgegenhaltungen:
- CN-A- 103 063 610
- JP-A- 2008 018 659
- US-A- 5 982 499
- US-A1- 2005 020 073
- US-A1- 2006 256 341
- US-A1- 2009 073 447
- US-A1- 2010 277 748
- US-A1- 2014 152 990
- WOJTATOWICZ T W: "LASER STUDY OF PHASE CHANGES IN THE SURFACE LAYER OF POROUS MATERIALS", QUANTUM ELECTRONICS, TURPION LTD., LONDON, GB, Bd. 31, Nr. 4, 1. April 2001 (2001-04-01), Seiten 318-320, XP001099837, ISSN: 1063-7818, DOI: 10.1070/QE2001V031N04ABEH001942
- A M DEREVYAGIN ET AL: "High-precision laser-interference method of moisture and hydrocarbons dew-points measurement of natural gas", PROCEEDINGS OF THE 2008 INTERNATIONAL GAS UNION RESEARCH CONFERENCE, 10. Oktober 2008 (2008-10-10), Seiten 1-16, XP055098333,

## Beschreibung

Die Erfindung betrifft eine Sensoranordnung mit den Merkmalen des Anspruchs 1 und ein Verfahren zur Bestimmung einer Betauung einer Prüffläche mit den Merkmalen des Anspruchs 15.

Bei der Temperatur- und Klimaprüfung von Prüfgut werden regelmäßig Klimaprüfkammern mit verschließbaren Prüfräumen eingesetzt, in denen zumindest eine Temperatur und auch andere Umgebungsparameter einstellbar sind, um bestimmte klimatische und andere Umgebungsbedingungen simulieren zu können. Prüfgut wird dabei innerhalb eines Prüfablaufs beziehungsweise eines Prüfzeitabschnitts der simulierten Umgebungsbedingung ausgesetzt. Beispielsweise kann ein Prüfablauf auch eine Erhöhung einer Luftfeuchte oder Absenkung einer Temperatur in der Klimaprüfkammer sowie eine Kühlung des Prüfguts umfassen. Dabei kann es zu einer Kondensation von im Prüfraum befindlicher Feuchtigkeit an einer Oberfläche des Prüfraums oder des Prüfguts kommen. Je nach Art der Prüfung kann diese Kondensation unerwünscht oder gewünscht sein. Beispielsweise kann auch eine Korrosionsprüfung von Prüfgut mit einer korrosiven Flüssigkeit, beispielsweise einer Salzlauge, durchgeführt werden. Die korrosive Flüssigkeit wird dabei in Art eines Sprühnebels auf das Prüfgut abgeschieden.

Um eine Benetzung beziehungsweise Betauung einer Prüffläche durch Abscheiden von Flüssigkeit aus der Gasphase oder Besprühen mit Flüssigkeit bestimmen zu können, werden regelmäßig Betauungssensoren eingesetzt, die unmittelbar an oder auf Prüfgut positioniert werden können. Insbesondere sind hier resistive Betauungssensoren bekannt, die vergleichsweise klein und leicht an Prüfgut befestigt werden können. Nachteilig ist jedoch, dass diese Sensoren dann das Prüfgut beeinflussen können und ein Messergebnis nicht sehr genau ist. Weiter sind Taupunktspiegel bekannt, die mittels eines Peltierelements auf eine Kondensationstemperatur temperiert werden. Bei Erreichen einer Taupunkttemperatur kondensiert Wasser auf einem Spiegel dessen Reflexionsvermögen mittels einer Optik bestimmt wird. Derartige Taupunktspiegel sind jedoch vergleichsweise groß und können nicht zur Bestimmung einer Betauung beziehungsweise eines Niederschlags in unmittelbarer Nähe von Prüfgut eingesetzt werden.

Aus der DE 10 2005 016 640 B4 ist ein weiteres optisches Verfahren zur Bestimmung einer Betauung beziehungsweise Benetzung einer Prüffläche bekannt. Hier wird mittels zweier Lichtwellenleiter in einen transparenten Körper Licht ein- und ausgekoppelt, wobei innerhalb des Körpers eine Reflexion des Lichts in Abhängigkeit einer Benetzung einer Oberfläche des Körpers und damit einer Lichtbrechung an den benetzten Oberfläche erfolgt. Ein derartig ausgebildeter Sensor ist vergleichsweise klein und ermöglicht eine Bestimmung einer Betauung in unmittelbarer Nähe von Prüfgut.

Die bekannten Messverfahren sind jedoch gegen feste und flüssige Teilchen im Messgas empfindlich, da Partikel jeglicher Art einen Messlichtstrahl des Taupunktspiegels streuen oder eine Lichtbrechung an einer Oberfläche stören können. Weiter kommt es regelmäßig bei einer Betauung der Prüffläche zu einer Tropfenbildung, was eine weitergehende Messung der Betauung verhindert, da ein Niederschlag auf der Prüffläche dann direkt von dem betreffenden Tropfen aufgenommen wird. Ein Ablaufen eines Tropfens an der Prüffläche verfälscht ein Messergebnis, da die Prüffläche dann zumindest teilweise wieder frei von einer Betauung ist. Die Betauung einer Prüffläche kann daher in einem fortgeschrittenen Stadium der Betauung nicht mehr verlässlich bestimmt beziehungsweise gemessen werden.

Aus der CN 103063610 A ist eine Sensoranordnung zur Taupunktmessung mit einem gekühlten Spiegel bekannt. Die Sensoranordnung umfasst zumindest zwei Kameras und zwei Lichtquellen, wobei Licht der Lichtquellen auf eine Spiegelfläche projiziert und von dieser zu den jeweils zugehörigen Kameras reflektiert wird.

Der Zeitschriftenartikel "Laser study of phase changes in the surface layer of porous materials", Quantum Electronics, Turpion LTD., London, Bd. 31, Nr. 4, 1. April 2001,beschreibt eine Versuchsanordnung zur Untersuchung von Feuchtigkeitskondensation auf einer Oberfläche eines Materials. Mittels eines Lasers wird auf die Oberfläche ein Lichtpunkt projiziert, der mittels zweier Kameras aufgenommen wird. Eine der Kameras ist dabei senkrecht zur Oberfläche angeordnet, eine andere quer zu der Oberfläche. Darüber hinaus ist eine Temperatur der Oberfläche mittels eines Peltierelements einstellbar und kann an verschiedenen Punkten gemessen werden. Mit dem beschriebenen Versuchsaufbau wird eine Feuchtigkeit bzw. ein Taupunkt einer Probe aus Gips bestimmt.

Aufgabe der Erfindung ist es daher, eine Sensoranordnung sowie ein Verfahren zur Bestimmung einer Betauung einer Prüffläche vorzuschlagen, die beziehungsweise das eine verbesserte Bestimmung einer Betauung ermöglicht.

Diese Aufgabe wird durch eine Sensoranordnung mit den Merkmalen des Anspruchs 1, eine Klimaprüfkammer mit den Merkmalen des Anspruchs 14 und ein Verfahren mit den Merkmalen des Anspruchs 15 gelöst.

Die erfindungsgemäße Sensoranordnung ist im Anspruch 1 definiert.

Die Prüffläche wird folglich mit der Lichtzuleitfaser über die Lichtquelle der Sensoranordnung beleuchtet. Das von der Prüffläche reflektierte Licht wird wieder in die Lichtableitfaser eingekoppelt und kann von dem Lichtdetektor der Sensoranordnung erfasst werden. Je nach der Betauung der Prüffläche ändert sich ein Reflexionsvermögen der Prüffläche, so dass anhand einer Intensität des reflektierten Lichts, welches durch den Lichtdetektor gemessen wird, die Betauung der Prüffläche bestimmt werden kann. Wesentlich ist, dass die Lichtzuleitfaser und die Lichtableitfaser beziehungsweise ein Strahlengang des austretenden Lichts relativ zu der Prüffläche so angeordnet ist, dass es zu einer Totalreflexion des austretenden Lichts auf der Prüffläche kommt, und das ein Strahlengang des reflektierten Lichts ein Einkoppeln des reflektierten Lichts in die Lichtableitfaser ermöglicht. Bei der Bestimmung der Betauung ist dann eine berührungslose Messung der Prüffläche beziehungsweise Bestimmung der Betauung der Prüffläche möglich. Mittels der Kameravorrichtung wird es möglich die Betauung der Prüffläche innerhalb einer Klimaprüfkammer vergleichsweise genau zu bestimmen, da die Prüffläche mittels der Kameravorrichtung erfasst beziehungsweise aufgenommen werden kann. Mit der Kameravorrichtung erfasste Bilddaten der Prüffläche können dann dazu benutzt werden, einen Zustand der Prüffläche in Verbindung mit einem Signal des Lichtdetektors zu bewerten. So kann beispielsweise eine Verunreinigung der Prüffläche, eine Tropfenbildung und ein Ablaufen von Tropfen von der Prüffläche mittels der Kameravorrichtung zeitsynchron zum Signal des Lichtdetektors mittels der Kameravorrichtung zeitsynchron zum Signal des Lichtdetektors bewertet und in Relation gesetzt beziehungsweise hinsichtlich Plausibilität verglichen werden. Beispielsweise kann dann ein plötzlich verändertes Signal des Lichtdetektors als das Ablaufen eines Wassertropfens von der Prüffläche erkannt werden. Somit wird es dann auch möglich, die Sensoranordnung über ein Anfangsstadium der Betauung hinaus zur beispielsweise Erfassung von Niederschlagsmengen auf der Prüffläche zu nutzen.

Die Sensoranordnung kann eine Positioniereinrichtung aufweisen, die die Lichtzuleitfaser und die Lichtableitfaser in einem Messabstand relativ zu der Prüffläche haltern kann. In einer besonders einfachen Ausführungsform kann die Positioniereinrichtung ein relativ zu der Prüffläche anordbares Bauteil sein, welches jeweils Enden der Lichtzuleitfaser und der Lichtableitfaser relativ zueinander in einer gewünschten Position haltert. Beispielsweise können die Lichtzuleitfaser und die Lichtableitfaser beziehungsweise deren Strahlengänge in einem Winkel β von 90° relativ zueinander angeordnet sein. Ein Schnittpunkt der Strahlengänge kann dann auf die Prüffläche ausgerichtet werden, so dass sich hieraus der Messabstand ergibt. Die Positioniereinrichtung kann ortsfest oder auch an einem Haltearm bewegbar ausgebildet sein. Die Lichtzuleitfaser und die Lichtableitfaser können aus Glasfasern ausgebildet sein und an der Positioniereinrichtung durch Einstecken in eine Durchgangsbohrung einfach befestigt werden.

Weiter kann die Positioniereinrichtung Ständer zur Anordnung der Positioniereinrichtung auf einer Prüffläche aufweisen. Die Positioniereinrichtung kommt dann zwar mit der Prüffläche in Berührung, jedoch nicht die Lichtzuleitfaser und die Lichtableitfaser, wodurch die Prüffläche nicht wesentlich beeinflusst wird. Die Ständer ermöglichen die Positionierung der Positioniereinrichtung in dem vorgesehenen Messabstand auf der Prüffläche. Dabei ist es vorteilhaft, wenn die Prüffläche im Wesentlichen eben ausgebildet ist. Auch wird es dann möglich, an Prüfgut schnell eine genaue Messung durchzuführen, da der Messabstand nicht erst eingestellt werden muss. Die Positioniereinrichtung mit den Ständern kann beispielsweise dachförmig oder bogenförmig ausgebildet sein.

An der Positioniereinrichtung kann die Kameravorrichtung angeordnet sein, wobei die Lichtzuleitfaser und die Lichtableitfaser konzentrisch zur Kameravorrichtung angeordnet sein können. Prinzipiell ist es jedoch auch möglich, die Kameravorrichtung unabhängig von der Lichtzuleitfaser und der Lichtableitfaser, benachbart zu diesen über der Prüffläche anzuordnen. Wenn die Kameravorrichtung die Prüffläche am Schnittpunkt der Strahlgänge der Lichtzuleitfaser und der Lichtableitfaser erfasst, können Signale des Lichtdetektors unmittelbar anhand von Bilddaten der Kameravorrichtung bewertet werden. Ein Strahlengang der Kameravorrichtung kann vorzugsweise orthogonal relativ zu der Prüffläche verlaufen, obschon es möglich ist, die Prüffläche mit der Kameravorrichtung auch unter einem Winkel < 90° zu erfassen.

Die Positioniereinrichtung, die Kameravorrichtung, Lichtzuleitfaser und die Lichtableitfaser können einen Sensorkopf ausbilden, wobei der Sensorkopf metallfrei sein kann. Das heißt, der Sensorkopf kann so ausgebildet sein, dass zumindest eine Oberfläche des Sensorkopfs metallfrei ist. Damit wird es möglich, den Sensorkopf auch in einer Korrosionsumgebung innerhalb einer Klimaprüfkammer einzusetzen. Insbesondere kann die Positioniereinrichtung aus einem Kunststoffmaterial ausgebildet sein, und die Kameravorrichtung kann in einem Schutzgehäuse aus Kunststoffmaterial aufgenommen sein.

Die Kameravorrichtung kann in einer Ausführungsform durch eine Kamera ausgebildet sein. Die Kamera kann dann in einem Schutzgehäuse benachbart der Lichtzuleitfaser und der Lichtableitfaser in einer Klimaprüfkammer angeordnet werden. Da in einer Klimaprüfkammer eine Temperatur in einem Temperaturenbereich von minus 75° Celsius bis plus 180° Celsius, vorzugsweise minus 100° Celsius bis plus 200° Celsius, sowie eine relative Luftfeuchte in einem Feuchtigkeitsbereich von 0 bis 100% ausgebildet werden kann, ist die Verwendung eines Schutzgehäuses für die Kamera geboten. Das Schutzgehäuse der Kamera kann daher auch temperierbar sein, vorzugsweise derart, dass die Kamera um Raumtemperatur, idealerweise bei 25° Celsius in einem Bereich von 10° Celsius bis 50° Celsius, temperiert werden kann, um eine Funktion der Kamera zu gewährleisten.

In einer zweiten Ausführungsform kann die Kameravorrichtung durch eine Lichtleitfaser mit einer daran gekoppelten Kamera ausgebildet sein, wobei die Lichtleitfaser ein Objektivende ausbilden kann. Demnach kann die Kamera dann auch außerhalb eines Prüfraums einer Klimaprüfkammer angeordnet sein, so dass kein Schutzgehäuse für die Kamera erforderlich ist. An ein Objektiv der Kamera ist dann die optische Lichtleitfaser angeschlossen die ihrerseits an einem Ende das Objektivende ausbildet. Das Objektivende kann dann unmittelbar in der Nähe der Prüffläche zusammen mit der Lichtzuleitfaser und der Lichtableitfaser positioniert werden, so dass die Prüffläche mittels der Kamera erfassbar wird. Dabei kann vorgesehen sein, dass das Ende der Lichtleitfaser beziehungsweise das Objektivende ein weiteres Objektiv zur Fokussierung und Aufnahme der Prüffläche aufweist. Da dann lediglich Lichtleitfasern in einem Messabstand von der Prüffläche positioniert werden, kann eine Erwärmung der Prüffläche, die ein Messergebnis verfälschen könnte, nahezu ausgeschlossen werden, wie dies bei einer direkten Beleuchtung der Prüffläche mit Lichtquellen der Fall wäre.

Die Kameravorrichtung kann weiter eine Temperiereinrichtung aufweisen, mittels der zumindest ein Objektiv der Kameravorrichtung temperierbar ist. Dann kann das Objektiv der Kameravorrichtung immer so temperiert werden, dass eine Taupunkttemperatur am Objektiv nicht erreicht wird. Eine unerwünschte Betauung des Objektivs der Kameravorrichtung kann so ausgeschlossen werden. Die Temperiereinrichtung kann ergänzend einen Temperatursensor umfassen, der in einem Prüfraum einer Klimaprüfkammer angeordnet ist. Eine Temperierung des Objektivs ist insbesondere dann sinnvoll, wenn die Kameravorrichtung durch eine Kamera mit einer Lichtleitfaser ausgebildet ist, da ein Objektiv beziehungsweise Objektivende der Lichtleitfaser leicht infolge von Betauung oder sonstigem Niederschlag bedeckt werden kann.

Die Kameravorrichtung kann eine Beleuchtungseinrichtung aufweisen, mittels der die mit der Kameravorrichtung erfassbare Prüffläche beleuchtbar ist. Die Kameravorrichtung kann dann unabhängig von der Lichtquelle der Lichtzuleitfaser genutzt werden. Beispielsweise kann dann ein Fokus der Kameravorrichtung auf einen Teil der Prüffläche gerichtet werden, der sich von dem Teil der Prüffläche unterscheidet an dem das Licht der Lichtzuleitfaser reflektiert wird. Mittels der Beleuchtungseinrichtung kann die Prüffläche mit homogenen und/oder gerichtetem Licht beleuchtet werden, so dass eine Betauungssituation der Prüffläche besonders gut erfassbar wird. Die Beleuchtungseinrichtung kann beispielsweise Leuchtdioden oder auch Lichtleitfasern umfassen, die örtlich unabhängig von einem Objektiv der Kameravorrichtung oder aber auch direkt an einem Objektiv der Kameravorrichtung angeordnet sein können.

Abweichend von der Erfindung kann die Prüffläche von einer Teilfläche eines Prüflings ausgebildet sein. Dann wird es möglich, eine Betauung direkt auf einer Oberfläche des Prüflings, die dann die Teilfläche ausbildet, zu messen. Weiter kann es auch vorgesehen sein, zunächst eine Kalibrierung der Sensoranordnung an der Teilfläche durchzuführen, um die Sensoranordnung an Reflexionseigenschaften der Teilfläche anzupassen.

In einer weiteren vorteilhaften Ausführungsform kann das Prüfblech eben ausgebildet sein, so dass eine Betauungssituation des Prüfblechs einfach erfasst werden kann und nicht durch eine besondere geometrische Form gegebenenfalls verfälscht wird. Die Prüffläche ist Bestandteil der Sensoranordnung, wodurch die Betauungssituation unabhängig von einem Prüfling messbar wird. Beispielsweise wird es dann auch möglich, mit einer weiteren Sensoranordnung die tatsächliche Betauung eines Prüflings und mit der Sensoranordnung ein Feuchtigkeitsmaß in einem Prüfraum einer Klimaprüfkammer über das Prüfblech zu bestimmen. Wenn das Prüfblech dünn ausgebildet ist, kann es dabei besonders schnell eine Raumtemperatur des Prüfraums annehmen. Ergänzend kann eine Temperierung des Prüfblechs vorgesehen sein, um eine Taupunkttemperatur des Prüfblechs einzustellen.

Das Prüfblech kann um einen Winkel γ von 120° gegenüber einer Horizontalen geneigt sein, wobei das Prüfblech eine Sammeleinrichtung für ablaufende Flüssigkeiten aufweisen kann. Durch die Neigung des Prüfblechs gegenüber der Horizontalen kann ein Ablaufen von Tropfen von dem Prüfblech bewirkt werden. Mittels der Sammeleinrichtung können die Tropfen dann gesammelt und eine abgelaufene Flüssigkeitsmenge bestimmt werden. Das Prüfblech kann dazu oberhalb eines Trichters, der dann die Sammeleinrichtung ausbildet, angeordnet sein. Weiter kann das Prüfblech einen trichterähnlichen Fortsatz aufweisen, der die vom Prüfblech ablaufende Flüssigkeit sammeln kann. Die ablaufende Flüssigkeit kann zum Beispiel einem Gefäß oder einem Mengensensor zur Bestimmung der Flüssigkeitsmenge zugeführt werden. Durch die dann mögliche Bestimmung der Flüssigkeitsmenge kann eine Betauung über einen längeren Zeitraum quantitativ gemessen werden.

Die Sensoranordnung kann einen Mengensensor aufweisen, der von einer weiteren Lichtzuleitfaser und einer weiteren Lichtableitfaser ausgebildet sein kann, wobei die weitere Lichtzuleitfaser mit einer weiteren Lichtquelle und die weitere Lichtableitfaser mit einem weiteren Lichtdetektor verbunden sein kann, wobei die weitere Lichtzuleitfaser und die weitere Lichtableitfaser so relativ zueinander angeordnet sein können, dass ein Messzwischenraum ausgebildet sein kann, wobei aus der weiteren Lichtzuleitfaser austretendes Licht den Messzwischenraum passieren kann und in die weitere Lichtableitfaser eingekoppelt werden kann. Ein Ende der weiteren Lichtzuleitfaser ist folglich von einem Ende der weiteren Lichtableitfaser soweit beabstandet, dass der Messzwischenraum ausgebildet ist. In dem Messzwischenraum wird dann eine sogenannte Lichtschranke durch den Mengensensor ausgebildet, so dass alle den Messzwischenraum passierenden Partikel oder Tropfen zu einer Lichtbrechung beziehungsweise Lichtstreuung führen und ein Signal des weiteren Lichtdetektors beeinflussen können.

Der Mengensensor kann so eine Zähleinrichtung ausbilden, mittels der von der Sammeleinrichtung abgegebene Wassertropfen in dem Messzwischenraum zählbar sind. Beispielsweise kann die Sammeleinrichtung eine Pipette aufweisen, über die Wassertropfen sukzessiv abgegeben werden können. Eine so portionierte Flüssigkeitsmenge kann dann mittels der Zähleinrichtung leicht gezählt werden. Aus der dann bestimmten Anzahl von Tropfen lässt sich eine Flüssigkeitsmenge einfach bestimmen.

Weiter kann der Mengensensor eine Aerosolmesseinrichtung ausbilden, mittels der Wassernebel in dem Messzwischenraum messbar ist. So wird es leicht möglich, Nebel innerhalb eines Prüfraums zu erfassen und zu quantifizieren. Die Menge an Wassernebel kann bei der Bestimmung der Betauung berücksichtigt werden und unter anderem zu einer Korrektur eines Signals des Lichtdetektors der Sensoranordnung herangezogen werden. Insgesamt wird so eine Erfassung aller bekannten Betauungsparameter ermöglicht. Zudem kann eine Benetzung durch Salznebel sowohl in einer Entstehungsphase als auch beim Abtrocknen erfasst und dokumentiert werden. Vorteilhaft kann der Mengensensor die Aerosolmesseinrichtung und gleichzeitig eine Zähleinrichtung ausbilden.

Die erfindungsgemäße Klimaprüfkammer weist eine erfindungsgemäße Sensoranordnung auf. Weitere vorteilhafte Ausführungsformen der Klimaprüfkammer ergeben sich aus den auf den Vorrichtungsanspruch 1 rückbezogenen Unteransprüchen.

Das erfindungsgemäße Verfahren ist im Anspruch 15 definiert.

Aus einem Messsignal des Lichtdetektors kann mittels einer Steuervorrichtung der Sensoranordnung ein Grad einer Betauung abgeleitet werden. In Abhängigkeit der Betauung der Prüffläche kommt es zu einer mehr oder weniger starken Reflexion des auf die Prüffläche auftreffenden Lichts der Lichtzuleitfaser und damit zu einem an die Reflexion beziehungsweise Betauung der Prüffläche angepassten Signal des Lichtdetektors. Das Signal beziehungsweise Messsignal des Lichtdetektors kann an die Steuervorrichtung weitergeleitet und von dieser ausgewertet werden. Die Steuervorrichtung kann eine Einrichtung zur Datenverarbeitung, beispielsweise ein Computer, oder eine SPS-Steuerung sein. Weiter kann die Steuervorrichtung einen Datenspeicher zur Speicherung von Messdaten beziehungsweise Messsignalen des Lichtdetektors umfassen.

Bilddaten der Kameraeinrichtung können mittels Bildverarbeitung einer Steuervorrichtung der Sensoranordnung analysiert werden, wobei eine Tropfenmenge, Tropfengröße und/oder ein Tropfenabfluss an der Prüffläche bestimmt werden kann. Die Bildverarbeitung kann eine Objekterkennung umfassen, mittels der es dann möglich wird, Tropfen zu erkennen und anhand ihrer Größe zu klassifizieren und gegebenenfalls auch zu zählen. Weiter können Bewegungsmuster, wie ein Tropfenabfluss erkannt und registriert werden. Durch eine fortlaufende Aufnahme und Bildverarbeitung der Bilddaten kann ein tatsächlicher Ablauf einer Betauung einer Prüffläche nachvollzogen und überprüft werden.

Weiter können mittels eines Mengensensors der Sensoranordnung von der Prüffläche abgegebene Wassertropfen gezählt und/oder Wassernebel gemessen werden, wobei mittels einer Steuervorrichtung der Sensoranordnung diese Messdaten zeitsynchron mit einem Messsignal des Lichtdetektors und/oder Bilddaten der Kameravorrichtung gespeichert werden können. Während oder nach einem Prüfablauf ist es dann möglich, zu einem bestimmten Zeitpunkt des Prüfablaufs die jeweiligen Mess- und Bilddaten parallel zu betrachten und auszuwerten. Durch die fortlaufende zeitsynchrone Speicherung erfolgt eine umfassende Dokumentation des gesamten Messablaufs, so dass eventuelle Inkonsistenzen in den Messergebnissen nachträglich noch überprüft werden können.

Weitere vorteilhafte Ausführungsformen des Verfahrens ergeben sich aus den auf den Vorrichtungsanspruch 1 rückbezogenen Unteransprüchen.

Nachfolgend wird die Erfindung unter Bezugnahme auf die beigefügten Zeichnungen näher erläutert.

Es zeigen:
- **Fig. 1**: ein erstes Beispiel einer Sensoranordnung in einer Seitenansicht;
- **Fig. 2**: eine Ausführungsform einer Sensoranordnung in einer Draufsicht;
- **Fig. 3**: eine Ausführungsform einer Sensoranordnung in einer Seitenansicht;
- **Fig. 4**: eine Darstellung eines Messsignals eines Mengensensors;
- **Fig. 5a**: eine Teilfläche einer Prüffläche in einer ersten Betauungssituation;
- **Fig. 5b**: die Teilfläche der Prüffläche in einer zweiten Betauungssituation;
- **Fig. 5c**: die Teilfläche der Prüffläche in einer dritten Betauungssituation.

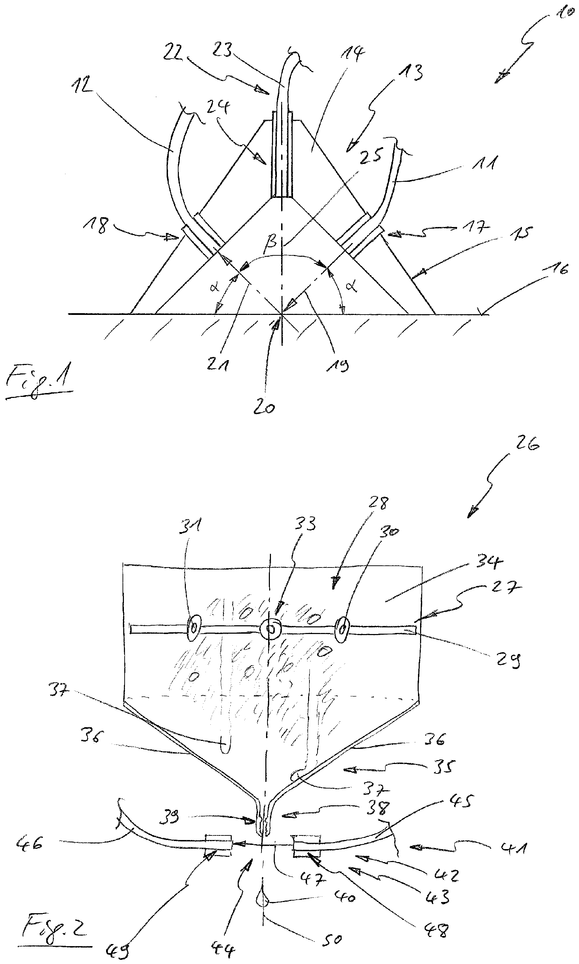

Die **Fig. 1** zeigt eine schematische Darstellung eines Beispiels einer Sensoranordnung 10 mit einer Lichtzuleitfaser 11 und einer Lichtableitfaser 12. Die Sensoranordnung 10 umfasst weiter eine Positioniereinrichtung 13, die von einem dachförmigen Halter 14 aus Kunststoffmaterial ausgebildet ist, der über Ständer 15 auf einer Prüffläche 16 angeordnet ist. Faserenden 17 und 18 der Lichtzuleitfaser 11 beziehungsweise Lichtableitfaser 12 sind so an dem Halter 14 befestigt, dass ein Strahlengang 19 der Lichtzuleitfaser 11 auf einen Reflexionspunkt 20 auf der Prüffläche 16 auftrifft und als Strahlengang 21 der Lichtableitfaser 12 in diese eingekoppelt wird. Ein Winkel α zwischen dem Strahlengang 19 beziehungsweise dem Strahlengang 21 und der Prüffläche 16 ist dabei immer gleich groß. Ein Winkel β zwischen den Strahlengängen 19 und 21 ist im hier gezeigten Beispiel 90°, kann aber prinzipiell jeden Winkel > 0° und < 180° annehmen. Mittels einer hier nicht dargestellten Lichtquelle der Sensoranordnung 10 wird Licht in die Lichtzuleitfaser 11 eingekoppelt und tritt am Faserende 17 aus. Je nach Betauung der Prüffläche 16 wird das Licht von der Prüffläche 16 reflektiert und entlang des Strahlengangs 21 in das Faserende 18 der Lichtableitfaser 12 eingekoppelt. An einem hier nicht dargestellten Ende der Lichtableitfaser 12 ist ein Lichtdetektor der Sensoranordnung 10 angeordnet, auf den dieses Licht fällt. Mittels des Lichtdetektors kann nun ein Messwert erfasst werden, der sich je nach einer Betauung und damit nach einer durch die Betauung bestimmten Reflektivität der Prüffläche 16 ändern kann. So wird es möglich anhand des Messwertes eine Betauung der Prüffläche 16 zu bestimmen.

Die Sensoranordnung 10 umfasst weiter eine Kameravorrichtung 22, die ihrerseits eine Lichtleitfaser 23 und eine hier nicht näher dargestellte Kamera an einem Ende der Lichtleitfaser umfasst. Ein Objektivende 24 der Lichtleitfaser 23 ist an dem Halter 14 so befestigt, dass ein Strahlengang 25 in den Reflexionspunkt 20 fällt. Der Strahlengang 25 ist orthogonal zu der Prüffläche 16 ausgerichtet, kann aber prinzipiell auch in einem davon abweichenden Winkel positioniert sein. So wird es möglich mittels der Kamera über die Lichtleitfaser 23 den beleuchteten Reflexionspunkt 20 auf der Prüffläche 16 zu erfassen und damit eine Betauungssituation auf der Prüffläche 16 zu bestimmen. Die Kamera erzeugt fortlaufend Bilddaten beziehungsweise Bilddatensätze, die von einer hier nicht dargestellten Steuervorrichtung der Sensoranordnung 10 mittels Bildverarbeitung analysiert werden. Auch Messdaten des Lichtdetektors werden von der Steuervorrichtung zeitsynchron zu den Bilddatensätzen der Kamera erfasst und analysiert. So wird es beispielsweise möglich, Messdaten des Lichtdetektors, die keine eindeutige Aussage über eine Betauung der Prüffläche 16 zulassen, mittels der Bilddaten zu interpretieren oder gegebenenfalls Messdaten durch die Bilddaten zu überprüfen. So können von der Prüffläche 16 ablaufende, hier nicht dargestellte Tropfen die Messdaten wesentlich ändern, ohne dass sich an einer Intensität eines Feuchtigkeitsniederschlags auf der Prüffläche 16 etwas ändert. Das Ablaufen des Tropfens kann dann über die Bilddaten erkannt und bei der Auswertung der Messdaten berücksichtigt werden.

Die **Fig. 2** zeigt eine Sensoranordnung 26 in einer Draufsicht, mit einer Positioniereinrichtung 27 über einer Prüffläche 28 und einer an einem Halter 29 der Positioniereinrichtung 27 befestigten Lichtzuleitfaser 30, Lichtableitfaser 31 und Lichtleitfaser 32 einer Kameravorrichtung 33. Die Prüffläche 28 wird von einem Prüfblech 34 der Positioniereinrichtung 27 ausgebildet und weist eine Sammeleinrichtung 35 zur Sammlung von an dem Prüfblech 34 ablaufender Flüssigkeit auf. Die Sammeleinrichtung 35 ist aus zwei konzentrisch, aufeinander zulaufenden Auffangflächen 36 an dem Prüfblech 34 ausgebildet, an denen Tropfen 37 ablaufen können. An einem unteren Ende 38 der Sammeleinrichtung 35 ist eine Pipette 39 ausgebildet, über die Tropfen 40 mit einer definierten Menge Flüssigkeit abgegeben werden können. Die Tropfen 40 werden mittels eines Mengensensors 41, der eine Zähleinrichtung 42 ausbildet, gezählt. Gleichzeitig bildet der Mengensensor 41 eine Aerosolmesseinrichtung 43 aus, mittels der Wassernebel in einem Messzwischenraum 44 des Mengensensors 41 gemessen werden kann. Der Mengensensor 41 umfasst eine weitere Lichtzuleitfaser 45 und eine weitere Lichtableitfaser 46, wobei eine weitere Lichtquelle des Mengensensors 41 Licht in die weitere Lichtzuleitfaser 45 einkoppelt, welches an einem Faserende 48 der weiteren Lichtzuleitfaser 45 austritt und wieder in ein Faserende 49 der weiteren Lichtableitfaser 46 eintritt beziehungsweise eingekoppelt wird, wobei an einem hier nicht dargestellten Ende der weiteren Lichtableitfaser 46 ein weiterer Lichtdetektor angeordnet ist, der eine Intensität des Lichts misst. Die Faserenden 48 und 49 sind so voneinander beabstandet, dass der Messzwischenraum 44 ausgebildet wird, wobei ein Strahlengang 47 der weiteren Lichtzuleitfaser 45 unmittelbar unterhalb der Pipette 39 verläuft, und eine Hochachse 50 der Sammeleinrichtung 35 beziehungsweise des Prüfblechs 34 schneidet. Durch die Tropfen 40 wird folglich der Strahlengang 47 kurzzeitig unterbrochen, was durch ein Signal beziehungsweise einen Messwert erfasst werden kann. Ebenfalls ist es möglich, Nebel in dem Messzwischenraum 44 zu bestimmen, da dann eine Intensität des von dem weiteren Lichtdetektor empfangenen Lichts herabgesetzt ist.

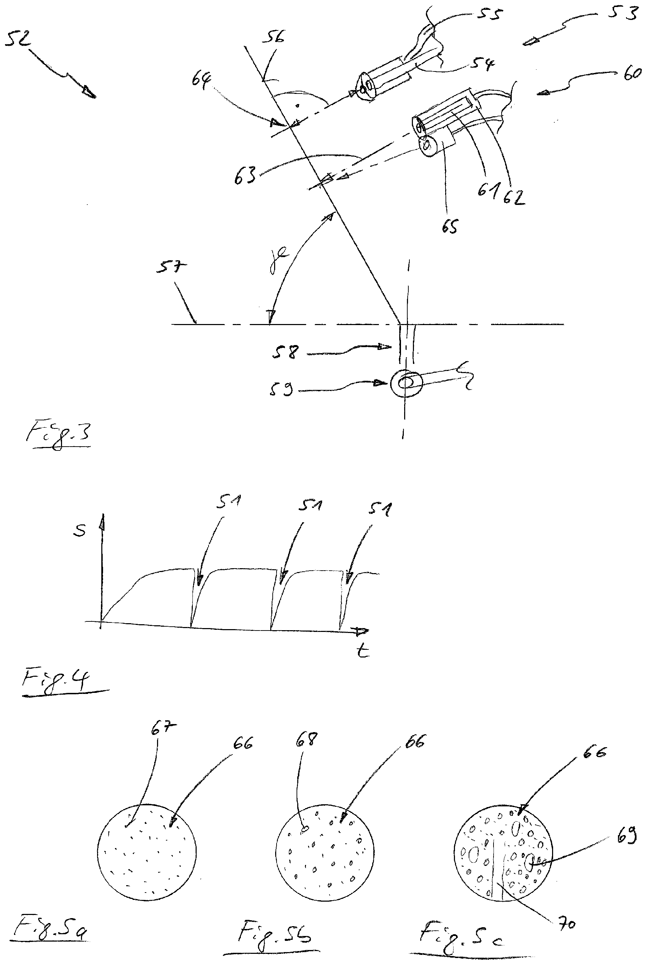

Die **Fig. 4** zeigt beispielhaft Messwerte des weiteren Lichtdetektors anhand eines Diagramms, welches ein Signal des weiteren Lichtdetektors über die Zeit darstellt. Ein Passieren des Strahlengangs 47 durch einen Tropfen 40 bewirkt hier stets einen Signalsprung 51.

Die **Fig. 3** zeigt eine weitere Ausführungsform einer Sensoranordnung 52 mit einer Positioniereinrichtung 53, über die eine Lichtzuleitfaser 54 und eine Lichtableitfaser 55 oberhalb einer Prüffläche 56 gehaltert sind. Die Prüffläche 56 ist dabei um einen Winkel γ von 120° relativ zu einer Horizontalen 57 geneigt. Unterhalb der Prüffläche 56 ist eine Sammeleinrichtung 58 mit einem Mengensensor 59 angeordnet. Im Unterschied zu der in **Fig. 2** dargestellten Sensoranordnung ist hier eine Kameravorrichtung 60 als eine Kamera 61 in einem Schutzgehäuse 62 ausgebildet. Ein Strahlengang 63 der Kamera 61 ist abweichend von einem Reflexionspunkt 64 der Lichtzuleitfaser 54 und der Lichtableitfaser 55 auf der Prüffläche 56 positioniert. Dazu umfasst die Kameravorrichtung 60 ergänzend eine Beleuchtungseinrichtung 65, mit der die Prüffläche 56 im Bereich des Strahlengangs 63 beleuchtet wird.

Die **Fig. 5a** bis **5c** zeigen jeweils unterschiedliche Betauungssituationen, wie sie sich auf einer der zuvor beschriebenen Prüfflächen einstellen können. Die **Fig. 5a** zeigt auf einer Prüffläche 66 kondensierte Tropfen 67 sehr geringer Größe. Die **Fig. 5b** zeigt in einem fortgeschrittenen Stadium eine Konglomeration von Flüssigkeit zu Tropen 68 mittlerer Größe, auf die eine Ausbildung von den in **Fig. 5c** dargestellten Tropfen 69 großer Größe folgt. Die Tropfen 69 laufen an der Prüffläche 66 bei Erreichen eines bestimmten Gewichts infolge von Tropfenwachstum ab und bilden auf der Prüffläche 66 dann eine Ablaufbahn 70 aus.

## Patentansprüche

1. Sensoranordnung (10, 26, 52) in der eine Betauung einer Prüffläche (16, 28 56, 66) bestimmt wird, wobei die Sensoranordnung eine Kameravorrichtung (22, 33, 60) umfasst, die relativ zu der Prüffläche so angeordnet ist, dass die Prüffläche mittels der Kameravorrichtung zumindest teilweise erfasst wird, wobei, die Sensoranordnung eine Lichtzuleitfaser (11, 30, 54) und eine Lichtableitfaser (12, 31, 55) aufweist, wobei die Lichtzuleitfaser mit einer Lichtquelle der Sensoranordnung und die Lichtableitfaser mit einem Lichtdetektor der Sensoranordnung verbunden ist, wobei die Lichtzuleitfaser und die Lichtableitfaser so relativ zueinander angeordnet sind und relativ zu der Prüffläche positionierbar sind, dass aus der Lichtzuleitfaser austretendes Licht auf die Prüffläche auftrifft, von dieser reflektiert wird und das reflektierte Licht in die Lichtableitfaser eingekoppelt wird, wobei die Prüffläche von einem um einen Winkel γ gegenüber einer Horizontalen (57) geneigten Prüfblech (34) der Sensoranordnung ausgebildet ist.

2. Sensoranordnung nach Anspruch 1,
**dadurch gekennzeichnet,**
**dass** die Sensoranordnung (10, 26, 52) eine Positioniereinrichtung (13, 27, 53) aufweist, die die Lichtzuleitfaser (11, 30, 54) und die Lichtableitfaser (12, 31, 55) in einem Messabstand relativ zu einer Prüffläche (16, 28, 56, 66) haltert.

3. Sensoranordnung nach Anspruch 2,
**dadurch gekennzeichnet,**
**dass** die Positioniereinrichtung (13, 27, 53) Ständer (15) zur Anordnung der Positioniereinrichtung auf einer Prüffläche (16, 28, 56, 66) aufweist.

4. Sensoranordnung nach Anspruch 2 oder 3,
**dadurch gekennzeichnet,**
**dass** an der Positioniereinrichtung (13, 27, 53) die Kameravorrichtung (22, 33, 60) angeordnet ist, wobei die Lichtzuleitfaser (11, 30) und die Lichtableitfaser (12, 31) konzentrisch zur Kameravorrichtung (22, 33) angeordnet sind.

5. Sensoranordnung nach einem der Ansprüche 2 bis 4,
**dadurch gekennzeichnet,**
**dass** die Positioniereinrichtung (13, 27, 53), die Kameravorrichtung (22, 33, 60), die Lichtzuleitfaser (11, 30, 54) und die Lichtableitfaser (12, 31, 55) einen Sensorkopf ausbilden, wobei der Sensorkopf metallfrei ist.

6. Sensoranordnung nach einem der vorangehenden Ansprüche,
**dadurch gekennzeichnet,**
**dass** die Kameravorrichtung (60) durch eine Kamera (61) ausgebildet ist.

7. Sensoranordnung nach einem der Ansprüche 1 bis 5,
**dadurch gekennzeichnet,**
**dass** die Kameravorrichtung (22, 33) durch eine Lichtleitfaser (23, 32) mit einer daran gekoppelten Kamera ausgebildet ist, wobei die Lichtleitfaser ein Objektivende (24) ausbildet.

8. Sensoranordnung nach einem der vorangehenden Ansprüche,
**dadurch gekennzeichnet,**
**dass** die Kameravorrichtung (22, 33, 60) eine Temperiereinrichtung aufweist, mittels der zumindest ein Objektiv der Kameravorrichtung temperierbar ist.

9. Sensoranordnung nach einem der vorangehenden Ansprüche,
**dadurch gekennzeichnet,**
**dass** die Kameravorrichtung (22, 33, 60) eine Beleuchtungseinrichtung (65) aufweist, mittels der die mit der Kameravorrichtung erfassbare Prüffläche (16, 28, 56, 66) beleuchtbar ist.

10. Sensoranordnung nach einem der vorangehenden Ansprüche,
**dadurch gekennzeichnet,**
**dass** das Prüfblech (34) um einen Winkel γ von 120° gegenüber der Horizontalen (57) geneigt ist, wobei das Prüfblech eine Sammeleinrichtung (35, 58) für ablaufende Flüssigkeit aufweist.

11. Sensoranordnung nach einem der vorangehenden Ansprüche,
**dadurch gekennzeichnet,**
**dass** die Sensoranordnung (10, 26, 52) einen Mengensensor (41, 59) aufweist, der von einer weiteren Lichtzuleitfaser (45) und einer weiteren Lichtableitfaser (46) ausgebildet ist, wobei die weitere Lichtzuleitfaser mit einer weiteren Lichtquelle und die weitere Lichtableitfaser mit einem weiteren Lichtdetektor verbunden ist, wobei die weitere Lichtzuleitfaser und die weitere Lichtableitfaser so relativ zueinander angeordnet sind, dass ein Messzwischenraum (44) ausgebildet ist, wobei aus der weiteren Lichtzuleitfaser austretendes Licht den Messzwischenraum passieren kann und in die weitere Lichtableitfaser einkoppelbar ist.

12. Sensoranordnung nach Anspruch 11,
**dadurch gekennzeichnet,**
**dass** der Mengensensor (41, 59) eine Zähleinrichtung (42) ausbildet, mittels der von der Sammeleinrichtung (35, 58) abgegebene Tropfen (40) in dem Messzwischenraum zählbar sind.

13. Sensoranordnung nach Anspruch 11 oder 12,
**dadurch gekennzeichnet,**
**dass** der Mengensensor (41, 59) eine Aerosolmesseinrichtung (43) ausbildet, mittels der Nebel in dem Messzwischenraum (44) messbar ist.

14. Klimaprüfkammer mit einer Sensoranordnung (10, 26, 52) nach einem der vorangehenden Ansprüche.

15. Verfahren in dem eine Betauung einer Prüffläche (16, 28, 56, 66) einer Sensoranordnung (10, 26, 52) bestimmt wird, wobei die Prüffläche mittels einer Kameravorrichtung (22, 33, 60) der Sensoranordnung zumindest teilweise erfasst wird, wobei eine Lichtzuleitfaser (11, 30, 54) mit einer Lichtquelle der Sensoranordnung und eine Lichtableitfaser (12, 31, 55) mit einem Lichtdetektor der Sensoranordnung verbunden werden, wobei aus der Lichtzuleitfaser Licht austritt, auf die Prüffläche auftrifft, von dieser reflektiert wird und das reflektierte Licht in die Lichtableitfaser eingekoppelt wird, wobei die Prüffläche von einem um einen Winkel γ gegenüber einer Horizontalen (57) geneigten Prüfblech (34) der Sensoranordnung ausgebildet wird.

16. Verfahren nach Anspruch 15,
**dadurch gekennzeichnet,**
**dass** aus einem Messsignal des Lichtdetektors mittels einer Steuervorrichtung der Sensoranordnung (10, 26, 52) ein Grad einer Betauung abgeleitet wird.

17. Verfahren nach Anspruch 15 oder 16,
**dadurch gekennzeichnet,**
**dass** Bilddaten der Kameraeinrichtung (22, 33, 60) mittels Bildverarbeitung einer Steuervorrichtung der Sensoranordnung (10, 26, 52) analysiert werden, wobei eine Tropfenmenge, Tropfengröße und/oder ein Tropfenabfluss an der Prüffläche (16, 28, 56, 66) bestimmt wird.

18. Verfahren nach einem der Ansprüche 15 bis 17,
**dadurch gekennzeichnet,**
**dass** mittels eines Mengensensors (41, 59) der Sensoranordnung (10, 26, 52) von der Prüffläche (16, 28, 56, 66) abgegebene Tropfen (40) gezählt und/oder Nebel gemessen wird, wobei mittels einer Steuervorrichtung der Sensoranordnung diese Messdaten zeitsynchron mit einem Messsignal des Lichtdetektors und/oder Bilddaten der Kameravorrichtung (22, 33, 60) gespeichert werden.

## Claims

1. A sensor assembly (10, 26, 52) in which condensation on a test surface (16, 28, 56, 66) is determined, the sensor assembly comprising a camera device (22, 33, 60) which is disposed relative to the test surface in such a manner that the test surface is at least partially captured by means of the camera device, the sensor assembly having a lead-in optical fiber (11, 30, 54) and a lead-out optical fiber (12, 31, 55), the lead-in optical fiber being connected to a light source of the sensor assembly and the lead-out optical fiber being connected to a light detector of the sensor assembly, the lead-in optical fiber and the lead-out optical fiber being disposed relative to each other and relative to the test surface in such a manner that light exiting the lead-in optical fiber hits the test surface, is reflected therefrom and the reflected light is coupled into the lead-out optical fiber, the test surface being formed by a test sheet (34) of the sensor assembly, said test sheet (34) being inclined at an angle γ relative to a horizontal (57).

2. The sensor assembly according to claim 1,
**characterized in that**
the sensor assembly (10, 26, 52) has a positioning device (13, 27, 53) that supports the lead-in optical fiber (11, 30, 54) and the lead-out optical fiber (12, 31, 55) at a measuring distance relative to a test surface (16, 28, 56, 66).

3. The sensor assembly according to claim 2,
**characterized in that**
the positioning device (13, 27, 53) has stands (15) for disposing the positioning device on a test surface (16, 28, 56, 66).

4. The sensor assembly according to claim 2 or 3,
**characterized in that**
the camera device (22, 33, 60) is disposed on the positioning device (13, 27, 53), the lead-in optical fiber (11, 30) and the lead-out optical fiber (12, 31) being disposed concentrically with the camera device (22, 33).

5. The sensor assembly according to any one of claims 2 to 4,
**characterized in that**
the positioning device (13, 27, 53), the camera device (22, 33, 60), the lead-in optical fiber (11, 30, 54) and the lead-out optical fiber (12, 31, 55) form a sensor head, the sensor head being free of metal.

6. The sensor assembly according to any one of the preceding claims,
**characterized in that**
the camera device (60) is formed by a camera (61).

7. The sensor assembly according to any one of claims 1 to 5,
**characterized in that**
the camera device (22, 33) is formed by an optical fiber (23, 32) having a camera coupled thereto, the optical fiber forming a lens end (24).

8. The sensor assembly according to any one of the preceding claims,
**characterized in that**
the camera device (22, 33, 60) has a temperature-control device by means of which the temperature of at least a lens of the camera device is controlled.

9. The sensor assembly according to any one of the preceding claims,
**characterized in that**
the camera device (22, 33, 60) has an illumination device (65) by means of which the test surface (16, 28, 56, 66) captured by the camera device is illuminated.

10. The sensor assembly according to any one of the preceding claims,
**characterized in that**
the test sheet (34) is inclined at an angle γ of 120° relative to the horizontal (57), the test sheet having a collecting device (35, 58) for collecting liquid running off.

11. The sensor assembly according to any one of the preceding claims,
**characterized in that**
the sensor assembly (10, 26, 52) has a quantity sensor (41, 59) which is formed by another lead-in optical fiber (45) and by another lead-out optical fiber (46), the other lead-in optical fiber being connected to another light source and the other lead-out optical fiber being connected to another light detector, the other lead-in optical fiber and the other lead-out optical fiber being disposed relative to each other in such a manner that a measurement gap (44) is formed, light exiting the other lead-in optical fiber passing through the measurement gap and being coupled into the other lead-out optical fiber.

12. The sensor assembly according to claim 11,
**characterized in that**
the quantity sensor (41, 59) forms a counting device (42) by means of which drops (40) discharged from the collecting device (35, 58) are counted in the measurement gap.

13. The sensor assembly according to claim 11 or 12,
**characterized in that**
the quantity sensor (41, 59) forms an aerosol measuring device (43) by means of which the mist in the measurement gap (44) is measured.

14. A climate test chamber comprising a sensor assembly (10, 26, 52) according to any one of the preceding claims.

15. A method in which condensation on a test surface (16, 28, 56, 66) of a sensor assembly (10, 26, 52) is determined, the test surface being at least partially captured by means of a camera device (22, 33, 60) of the sensor assembly, a lead-in optical fiber (11, 30, 54) being connected to a light source of the sensor assembly and a lead-out optical fiber (12, 31, 55) being connected to a light detector of the sensor assembly, light exiting the lead-in optical fiber, hitting the test surface, being reflected therefrom and the reflected light being coupled into the lead-out optical fiber, the test surface being formed by a test sheet (34) of the sensor assembly, said test sheet being inclined at an angle γ relative to a horizontal (57).

16. The method according to claim 15,
**characterized in that**
a degree of condensation is derived from a measuring signal of the light detector by means of a control device of the sensor assembly (10, 26, 52).

17. The method according to claim 15 or 16,
**characterized in that**
image data of the camera device (22, 33, 60) is analyzed by means of image processing of a control device of the sensor assembly (10, 26, 52), a drop quantity, a drop size and/or a drop runoff on the test surface (16, 28, 56, 66) being determined.

18. The method according to any one of claims 15 to 17,
**characterized in that**
by means of a quantity sensor (41, 59) of the sensor assembly (10, 26, 52), drops (40) discharged from the test surface (16, 28, 56, 66) are counted and/or mist is measured, said measurement data being stored synchronously with a measuring signal of the light detector and/or image data of the camera device (22, 33, 60) by means of a control device of the sensor assembly.

## Revendications

1. Ensemble capteur (10, 26, 52) dans lequel une condensation sur une surface d'essai (16, 28, 56, 66) est déterminée, l'ensemble capteur comprenant un dispositif de caméra (22, 33, 60) qui est disposé par rapport à la surface d'essai de telle manière que la surface d'essai est saisie au moins en partie par le dispositif de caméra, l'ensemble capteur ayant une fibre optique d'amenée (11, 30, 54) et une fibre optique de sortie (12, 31, 55), la fibre optique d'amenée étant reliée à une source de lumière de l'ensemble capteur et la fibre optique de sortie étant reliée à un détecteur de lumière de l'ensemble capteur, la fibre optique d'amenée et la fibre optique de sortie étant disposées l'une par rapport à l'autre et par rapport à la surface d'essai de telle manière que la lumière sortant de la fibre optique d'amenée rencontre la surface d'essai, est réfléchie par celle-ci et la lumière réfléchie est injectée dans la fibre optique de sortie, la surface d'essai étant formée par une tôle d'essai (34) de l'ensemble capteur, ladite tôle d'essai (34) étant inclinée sous un angle γ par rapport à un axe horizontal (57).

2. Ensemble capteur selon la revendication 1,
**caractérisé en ce que**
l'ensemble capteur (10, 26, 52) a un dispositif de positionnement (13, 27, 53) qui supporte la fibre optique d'amenée (11, 30, 54) et la fibre optique de sortie (12, 31, 55) à une distance de mesure par rapport à une surface d'essai (16, 28, 56, 66).

3. Ensemble capteur selon la revendication 2,
**caractérisé en ce que**
le dispositif de positionnement (13, 27, 53) a des supports (15) pour disposer le dispositif de positionnement sur une surface d'essai (16, 28, 56, 66).

4. Ensemble capteur selon la revendication 2 ou 3,
**caractérisé en ce que**
le dispositif de caméra (22, 33, 60) est disposé sur le dispositif de positionnement (13, 27, 53), la fibre optique d'amenée (11, 30) et la fibre optique de sortie (12, 31) étant disposées concentriquement au dispositif de caméra (22, 33).

5. Ensemble capteur selon l'une quelconque des revendications 2 à 4,
**caractérisé en ce que**
le dispositif de positionnement (13, 27, 53), le dispositif de caméra (22, 33, 60), la fibre optique d'amenée (11, 30, 54) et la fibre optique de sortie (12, 31, 55) forment une tête de capteur, ladite tête de capteur étant exempte de métal.

6. Ensemble capteur selon l'une quelconque des revendications précédentes,
**caractérisé en ce que**
le dispositif de caméra (60) est formé par une caméra (61).

7. Ensemble capteur selon l'une quelconque des revendications 1 à 5,
**caractérisé en ce que**
le dispositif de caméra (22, 33) est formé par une fibre optique (23, 32) ayant une caméra couplée à celle-ci, la fibre optique formant une extrémité (24) d'un objectif.

8. Ensemble capteur selon l'une quelconque des revendications précédentes,
**caractérisé en ce que**
le dispositif de caméra (22, 33, 60) a un dispositif de régulation de température à l'aide duquel au moins un objectif du dispositif de caméra est régulé.

9. Ensemble capteur selon l'une quelconque des revendications précédentes,
**caractérisé en ce que**
le dispositif de caméra (22, 33, 60) a un dispositif d'éclairage (65) à l'aide duquel la surface d'essai (16, 28, 56, 66) saisie par le dispositif de caméra est éclairée.

10. Ensemble capteur selon l'une quelconque des revendications précédentes,
**caractérisé en ce que**
la tôle d'essai (34) est inclinée sous un angle γ de 120° par rapport à l'axe horizontal (57), la tôle d'essai ayant un dispositif collecteur (35, 58) pour le liquide qui s'écoule.

11. Ensemble capteur selon l'une quelconque des revendications précédentes,
**caractérisé en ce que**
l'ensemble capteur (10, 26, 52) a un capteur de quantité (41, 59) qui est formé par une autre fibre optique d'amenée (45) et par une autre fibre optique de sortie (46), l'autre fibre optique d'amenée étant reliée à une autre source de lumière et l'autre fibre optique de sortie étant reliée à un autre détecteur de lumière, l'autre fibre optique d'amenée et l'autre fibre optique de sortie étant disposées l'une par rapport à l'autre de telle manière qu'un espace de mesure (44) est formé, la lumière sortant de l'autre fibre optique d'amenée traversant l'espace de mesure et étant injectée dans l'autre fibre optique de sortie.

12. Ensemble capteur selon la revendication 11,
**caractérisé en ce que**
le capteur de quantité (41, 59) forme un dispositif de comptage (42) à l'aide duquel des gouttes (40) dégagées par le dispositif collecteur (35, 58) sont comptées dans l'espace de mesure.

13. Ensemble capteur selon la revendication 11 ou 12,
**caractérisé en ce que**
le capteur de quantité (41, 59) forme un dispositif de mesure d'aérosol (43) à l'aide duquel le brouillard dans l'espace de mesure (44) est mesuré.

14. Chambre d'essai climatique comprenant un ensemble capteur (10, 26, 52) selon l'une quelconque des revendications précédentes.

15. Procédé dans lequel une condensation sur une surface d'essai (16, 28, 56, 66) d'un ensemble capteur (10, 26, 52) est déterminée, la surface d'essai étant saisie au moins en partie par un dispositif de caméra (22, 33, 60) de l'ensemble capteur, une fibre optique d'amenée (11, 30, 54) étant reliée à une source de lumière de l'ensemble capteur et une fibre optique de sortie (12, 31, 55) étant reliée à un détecteur de lumière de l'ensemble capteur, la lumière sortant de la fibre optique d'amenée, rencontrant la surface d'essai, étant réfléchie par la surface d'essai et la lumière réfléchie étant injectée dans la fibre optique de sortie, la surface d'essai étant formée par une tôle d'essai (34) de l'ensemble capteur, ladite tôle d'essai étant inclinée sous un angle γ par rapport à un axe horizontal (57).

16. Procédé selon la revendication 15,
**caractérisé en ce**
**qu'**un degré d'une condensation étant dérivé d'un signal de mesure du détecteur de lumière à l'aide d'un dispositif de commande de l'ensemble capteur (10, 26, 52).

17. Procédé selon la revendication 15 ou 16,
**caractérisé en ce que**
des données d'image du dispositif de caméra (22, 33, 60) sont analysées à l'aide du traitement de données d'un dispositif de commande de l'ensemble capteur (10, 26, 52), une quantité de gouttes, une taille de gouttes et/ou un écoulement de gouttes sur la surface d'essai (16, 28, 56, 66) étant déterminé.

18. Procédé selon l'une quelconque des revendications 15 à 17,
**caractérisé en ce**
**qu'**à l'aide du capteur de quantité (41, 59) de l'ensemble capteur (10, 26, 52), des gouttes (40) dégagées par la surface d'essai (16, 28, 56, 66) sont comptées et/ou du brouillard est mesuré, ces données de mesure étant enregistrées de manière synchrone à un signal du détecteur de lumière et/ou à des données d'image du dispositif de caméra (22, 33, 60) à l'aide d'un dispositif de commande de l'ensemble capteur.
